# EUROPEAN PATENT SPECIFICATION

(11) **EP 1 405 533 B1**
(45) Date of publication and mention of the grant of the patent: **26.03.2008**
(21) Application number: 01956528.2
(22) Date of filing: 11.07.2001
(51) Int. Cl.: H04Q 7/22, H04L 12/56

(54) **METHODS FOR TRANSMITTING AND RECEIVING SERVICE DATA, NETWORK ELEMENTS AND COMMUNICATIONS NETWORK AND SYSTEM**
VERFAHREN ZUR ÜBERTRAGUNG UND ZUM EMPFANG VON DIENSTDATEN, NETZWERKELEMENTE UND KOMMUNIKATIONSNETZWERK UND -SYSTEM
PROCEDES DE TRANSMISSION ET DE RECEPTION DE DONNEES DE SERVICE, ELEMENTS DE RESEAU, ET RESEAU ET SYSTEME DE COMMUNICATIONS

(43) Date of publication of application: 07.04.2004
(73) Proprietor: Nokia Corporation, 02150 Espoo (FI)
(72) Inventor: SARKKINEN, Sinikka, FIN-36200 Kangasala (FI); TOSSAVAINEN, Jari, FIN-01350 Vantaa (FI)
(74) Representative: Cohausz & Florack
(86) International application number: PCT/EP2001/007997
(87) International publication number: WO 2003/007635

(56) References cited:
- EP-A1- 0 793 368
- EP-A1- 0 963 133
- EP-A1- 1 079 643
- WO-A2-00/08868

## Description

### FIELD OF THE INVENTION

The invention relates to a method for transmitting data for a specific service from a first network element of a communications network via at least a second network element of a communications network to a group of terminals, wherein said first network element receives said data for said specific service from a service provider. The invention relates equally to a complementary receiving method, to corresponding network elements and to a corresponding communications network and system.

### BACKGROUND OF THE INVENTION

Transmissions of data from a first network element via a second network element to a group of terminals are employed in particular for cell broadcast services (CBS) or for multicast services in communications systems.

CBS messages are cell broadcast messages to defined geographical areas which comprise one or more cells of a communications system. The geographical area can be defined separately for each CBS messages.

For CBS, small data packets of 1246 bytes are transmitted in each selected cell on a FACH (Forward Access Channel) channel assigned for cell broadcast type of data transmission after the segmentation on layer 2 (L2) by the Radio Link Controller (RLC) to the predetermined size, which is defined by layer 3 (L3). All terminals in one of the selected cells can receive the data packets over the air interface by listening to an SCCPCH (Secondary Common Control Physical Channel) which contains such a FACH channel. The use of the service by the user of a terminal does not have to be indicated to the network, i.e. also idle mode terminals can use the service and therefore also no feedback channel is required. Further, no ciphering is performed to the data, and the users of the service are cannot be charged, therefore service provider has to pay the service. A service type which could typically use the cell broadcast concept is small advertisements from shopkeepers, short news, road services etc.

Multicast services have been proposed in addition for more sophisticated transmissions, in particular in UMTS and GPRS. Multicast services can be employed for offering services only to terminal users who ordered a specific service from a service provider. This can be achieved e.g. by applying a ciphering to the data which is to be transmitted, ensuring that only subscribed terminal users are able to use received data. The service is thus not available for all users in the cell. Depending on the agreement, the service can then be charged either to the subscribed users or to the service provider. The proposed multicast service is similar to a data transmission from one service provider to a restricted group of users by using method defined for broadcast transmissions.

Before a message can be transmitted to terminals, though, it has to be transmitted from the service provider to the selected cells, and thus between different network elements of connecting communications networks. According to the technical specification 3GPP TS 23.041 V3.4.0 (2001-06): "3rd Generation Partnership Project; Technical Specification Group Terminals; Technical realization of Cell Broadcast Service (CBS) (Release 1999)", a cell broadcast center CBC is provided as a first defined network element responsible for receiving and forwarding data from service providers. For GSM (Global System for Mobile communications), the CBC transmits the data in a an SABP (Service Area Broadcast Protocol) Write-Replace message of one CBC PDU (Protocol Data Unit) to one or more BSCs (base station controller) as second network elements. The respective BSC then transmits the data via base stations over the air interface to terminals of the respective cell. For UMTS (Universal Mobile Telecommunications System), the CBC as defined first network element transmits the data in a an SABP (Service Area Broadcast Protocol) Write-Replace message of one CBC PDU (Protocol Data Unit) over the Iu-BC interface to one or more RNCs (radio network controller) of one or more UTRANs (UMTS Terrestrial Radio Access Network) as second network elements. The respective RNC then transmits the data in packets, which size is defined by L3, on a FACH via node Bs to terminals. Since in UMTS the CBC is part of the core network, a mandatory protocol between CBC and RNC has to be used. For UTRAN, the transmissions for CBSs from a CBC to an RNC are specified in the technical specification 3GPP TS 25.419 V3.4.0 (2001-03): "3rd Generation Partnership Project; Technical Specification Group RAN; UTRAN Iu-BC Interface: Service Area Broadcast Protocol SABP (Release 1999)".

The current specifications of Cell Broadcast services allow the transmission of a CBS message, comprising the service, between the CBC and RNC or BSC in a single data packet with 1246 bytes of data at maximum. The transmission in a single data packet moreover implies that all data belonging to one service has to be present in the CBC before the CBC forwards the PDUs to the RNC or BSC. This restricts the use of Cell Broadcast to such services which require a total data amount of 1246 bytes at the most, or of which the life time is so small that the buffering of all data in CBC first is acceptable from the delay point of view, thus excluding e.g. video streams, music clips etc.

European patent application EP 1 079 643 A1 describes a GPRS tunnelling protocol header having an optional sequence number field, and including a sequence field. The sequence number field is used to guarantee in-sequence delivery of messages. The sequence field is used to indicate whether the sequence number field is present in the header. If the sequence field indicates that the sequence field is not present, the processing circuitry knows it does not have to look for the sequence number. Thus the sequence field, where appropriate, can be eliminated from the header.

European patent application EP 0 963 133 A1 proposes that for transmission of data frames between a first mobile network element and a second mobile network element in accordance with the ATM protocol, data frames of different channels are split up in subframes, ordered and then embedded in respective minicells. Minicells containing information of different channels are then combined into ATM cells that are transferred between the first mobile network element and the second mobile network element. In this way, transcoders in the second mobile network element can already start decoding data frames of several channels after receipt of the most urgent data which is contained in the first ATM cells.

### SUMMARY OF THE INVENTION

Proceeding from document EP 1 079 643 A1, it is an object of the invention to provide an alternative approach for enabling an improved transmission of data directed at a group of terminals of a communications system. It is in particular an object to provide an alternative approach for allowing the transmission of messages containing more data and of messages with a longer life-time between network elements of the communications system.

This object is reached according to the invention with a method for transmitting data for a specific service from a first network element of a communications network via at least a second network element of a communications network to a group of terminals, wherein the first network element receives the data for the specific service from a service provider, and wherein the first network element distributes the data for the specific service to one or more packets for transmission to the at least second network element. It is further proposed that the first network element provides each of the one or more packets with a data flow identification information. This information enables the at least second network element to identify all received packets to which the service data was distributed.

A complementary method comprises receiving at a second network element of a communications network packets from a first network element of a communications network. To these received packets, data for a specific service was distributed at the first network element upon receipt of the data for a specific service from a service provider. Each of the received packets comprises a data flow identification information identifying all packets to which data for the specific service was distributed. The method further comprises at the second network element extracting the data flow identification information from each received packet containing such a data flow identification information and forwarding the data for a specific service in accordance with the extracted information to a group of terminals.

The service provider can be on the one hand an individual person, a community, a club, a company, a government, or any other entity who does not own the network. On the other hand, the service provider can be the operator who owns the network. The kind of service provider may have an influence on the direction from which the data is provided to the first network element. The group of terminals to which the service data is to be transmitted can comprise one or more terminals. For multicast services the number will depend e.g. on the number of subscribers. The data can moreover reach the terminals of the group via a single second network element or via several second network elements.

The object of the invention is equally reached with a corresponding first network element, with a corresponding second network element, with a communications network comprising at least one such first and one such second network element, and with a communications system comprising at least one such first network element, one such second network element and a group of terminals.

The invention proceeds from the idea that a service data flow can be longer or more extended in time, if it does not have to be transmitted in a single packet as currently specified for cell broadcast messages, but can be distributed to a plurality of packets. In order to enable a second network element to process a plurality of received packets comprising a service data flow correctly, it is further proposed that an additional information is included in the packets to which the service data flow is distributed. This additional information can be used in the second network element to identify all packets belonging to a single service data flow.

The invention thus enables on the one hand to support services of which the total data amount exceeds 1246 bytes. On the other hand, it enables to support services which total life time makes a buffering of data in the first network element of the communications system impractical.

The data flow identification information can always be included in each packet to which the data is distributed. Alternatively, the data flow identification information may only be included in each packet whenever the information is needed, i.e. when the data was distributed to more than one packet.

Preferred embodiments of the invention become apparent from the subclaims.

In a preferred embodiment of the invention, the first network element distributing a data flow of one service to different packets is a CBC. The CBC advantageously receives the data flow from some service providers application.
In case the first network element is a CBC, the packets can be CBC PDUs transmitted over an Iu-BC interface. In particular the SABP-Write-Replace messages of CBC PDUs can be employed for including the data for a specific service.

In an equally preferred embodiment of the invention, the at least one second network element comprises one or more UTRAN-RNCs and/or one or more GSM-BSCs. But the invention can equally be realized with any other suitable network element, even with a base station or a media gateway etc.

The content of the new data flow identification information is included preferably in a data flow identification field. The information can be structured in any suitable way and comprise in addition to an identification of the data flow a variety of other information.

The data flow identification information can comprise in particular a flow number. If a separate flow number is assigned to each service, this enables the second network element in an easy way to identify all packets belonging to the data flow of a specific service.

Another information which might be included in the data flow identification information is an indication of the length of the service, e.g. in terms of bits or bytes belonging to the same flow. The number can be defined as the total amount of data in a corresponding data flow, or as a calculated value of data still to be transmitted by the first network element.

The data flow identification information can further comprise as similar value an indication of the number of packets belonging to the same data flow. The number can indicate the total number of packets, and in this case the value of the indication would be the same in all packets belonging into the same data flow. Alternatively, such a value of the data flow identification information can indicate how many packets are still in the buffer of the first network element, i.e. the value of the indication is decreased each time when another packet is sent.

Moreover, the data flow identification information can comprise an identifier which indicates the end of the data flow. For instance, a value x could indicate that the respective packet is not the last packet belonging to a specific data flow, and a value y could indicate that the respective packet is the last packet belonging to a specific data flow.

Furthermore, the data flow identification information may contain a start indicator for data, which is included in the first packet in the flow to indicate the start of new data flow. The data flow identification information may also contain a length indicator for data, which is used only in the last packet to indicate the end of the data flow for the same service. Preferably, such a length indicator indicates the location of the last byte in the last packet. Start and length indicator could share the same position in the data flow identification information.

The proposed distribution of a data flow of a single service to several packets can be employed based on the currently specified maximum data size of 1246 bytes per packet.

Alternatively, the conventional packet size of 1246 could in addition be increased, or a second kind of PDUs with a size of e.g. a multiple of 1246 bytes could be introduced. It has to be taken into account, however, that the packet length has some optimum value depending on the application. If the packet is too short, overhead increases. If the packet is too long, reliability and real time aspects suffer.

In a further preferred embodiment of the invention, also data of a total amount of less than the available data space in one packet, e.g. 1246 bytes, can be distributed to several packets for transmission from the first network element to the second network element. Currently, if there is a plurality of small application level SDUs (Service Data Units), these are combined into a single CBC PDU. By providing a possibility of distributing such data to a plurality of packets, the required buffering capacity of the CBC or other first network elements can be decreased and the delay of the data be reduced.

The proposed invention can be employed in particular for cell broadcast services and for multicast services.

The proposed invention can moreover be employed in particular, though not exclusively, in GPRS and UMTS.

### BRIEF DESCRIPTION OF THE FIGURES

In the following, the invention is explained in more detail with reference to drawings, of which
- Fig. 1: shows an architecture supporting the service according to the invention;
- Fig. 2: is a table taken from specification TS 25.419 and illustrates the current structure of a Write-Replace message; and
- Fig. 3: is a table illustrating an embodiment of a structure of a Write-Replace message according to the invention.

### DETAILED DESCRIPTION OF THE INVENTION

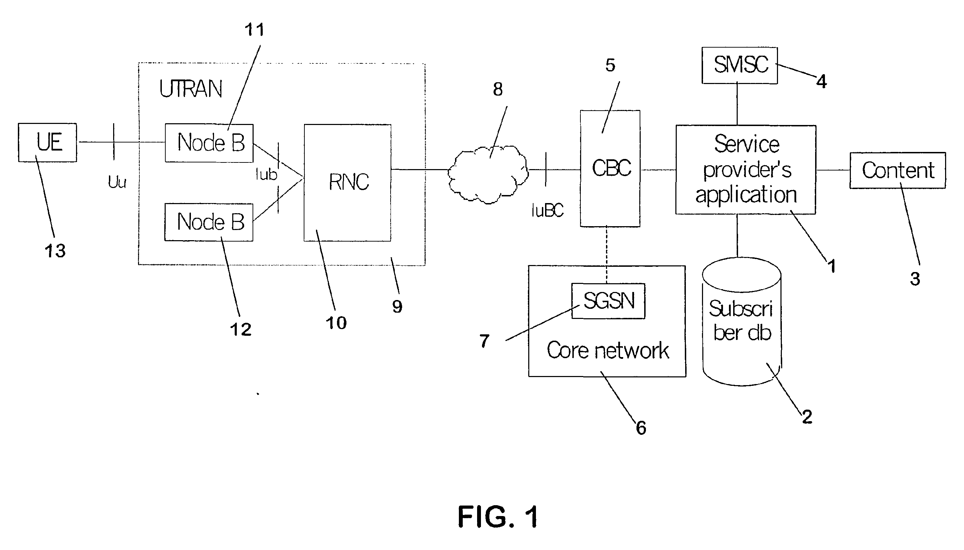

Figure 1 shows an embodiment of a UMTS network architecture which can be employed for cell broadcast or multicast services according to the invention.

The architecture comprises a service provider's application 1 which has access to a subscriber data base 2, to a content data base 3 and to a short message service center SMSC 4. The service provider's application 1 is further connected to a cell broadcast center CBC 5. The CBC 5 is part of the core network 6 and connected to a routing node, e.g. a 3G (third generation) Serving GPRS Support Node SGSN 7, via a Bc reference point.

The CBC 5 is connected in addition via the IuBC interface and an interconnecting network 8 to one or more RNCs of one or more UTRANs. In figure 1, only a connection to a single RNC 10 of a single UTRAN 9 is shown. The RNC 10 is connected within the UTRAN 9 to a plurality of Node Bs 11, 12. In the situation depicted in figure 1, a user equipment UE 13 moreover accesses one of the node Bs 11 via the air interface Uu.

In case the service provider wants to provide a specific service by sending out a multicast message, the service provider's application 1 assembles information from the subscriber data base 2 and the content data base 3. From the subscriber data base 2 information is retrieved about the subscribers to whom the message is to be transmitted, indicating for example the cells in which the message has to be transmitted. From the content data base 3 the data for the desired service is retrieved. The data for the desired service is ciphered in a way that can only be deciphered by subscribing terminals. The assembled information is then forwarded by the service provider's application 1 to the CBC 5. The SMSC 4 connected to the service provider's application 1 is a possible service source for services requiring up to 1246 bytes.

The CBC 5 is responsible for the management of cell broadcast service messages. The CBC 5 prepares CBC PDUs for transmitting service data to the RNC 10, each PDU comprising a SABP Write-Replace message. Each SABP Write-Replace message is designed to comprise service data of up to 1246 byte, and according to the invention, the data for a single service can be distributed to the SABP Write-Replace messages of several PDUs, in case the size of the data exceeds 1246 bytes. The number of the PDUs provided by the CBC 5 for one service thus depends on the size of the service data that is to be transmitted. Each SABP Write-Replace message comprises in addition to the service data different parameters. According to the invention, one of these parameters is a data flow identifier included in a data flow identification field of each SABP Write-Replace message. This field identifies in all messages and thus in each PDU the data flow belonging to a single service.

The CBC 5 forwards the prepared CBC PDU via the Iu-BC interface and the interconnecting network 8 to the RNC 10 of the depicted UTRAN 9. The RNC 10 receives the CBC PDUs, and based on the included data flow identification field it is able to identify all packets comprising data of a single service. This knowledge is then used by the RNC 10 to forward the data in a suitable way to terminals 13. The kind of transmission to the terminals employed by the RNC 10 may depend on a threshold value for the number of subscribing terminals in the cell of the RNC 10. Below the threshold value the RNC 10 can employ point-to-point transmissions, and above the threshold value the RNC 10 can employ point-to-multipoint transmissions. For point-to-multipoint transmissions, the RNC 10 assembles CBS messages including the service data and selected additional information of the Write-Replace messages. These CBS messages are inserted as small packets to a FACH of a SCCPCH, which is transmitted via node B 11 over the air interface Uu.

The user equipment 13 listens to the SCCPCH and is thus able to retrieve the small packets from the FACH in which they were included. If the user equipment 13 is able to decipher the data in the small packets, it presents the deciphered data to the user.

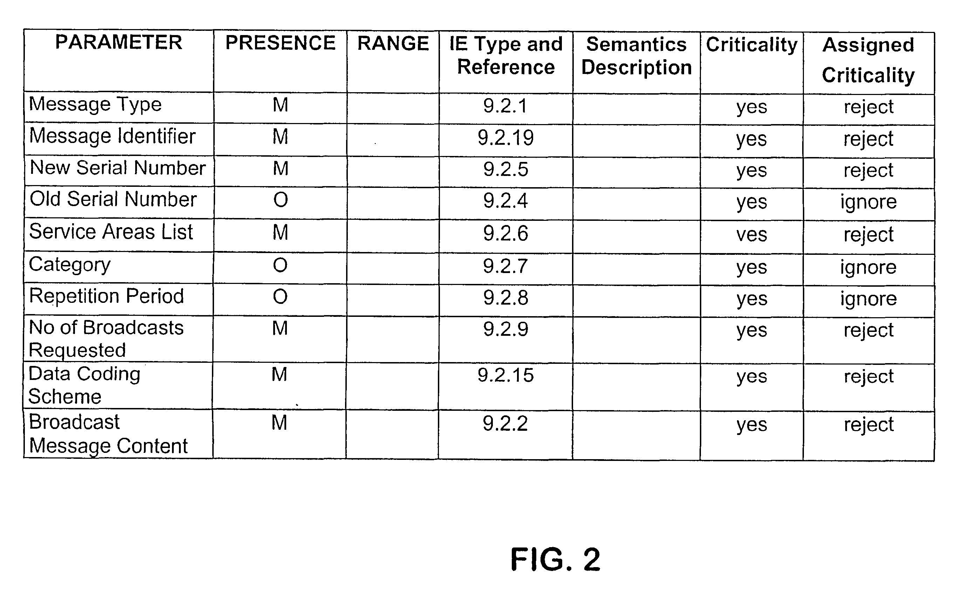

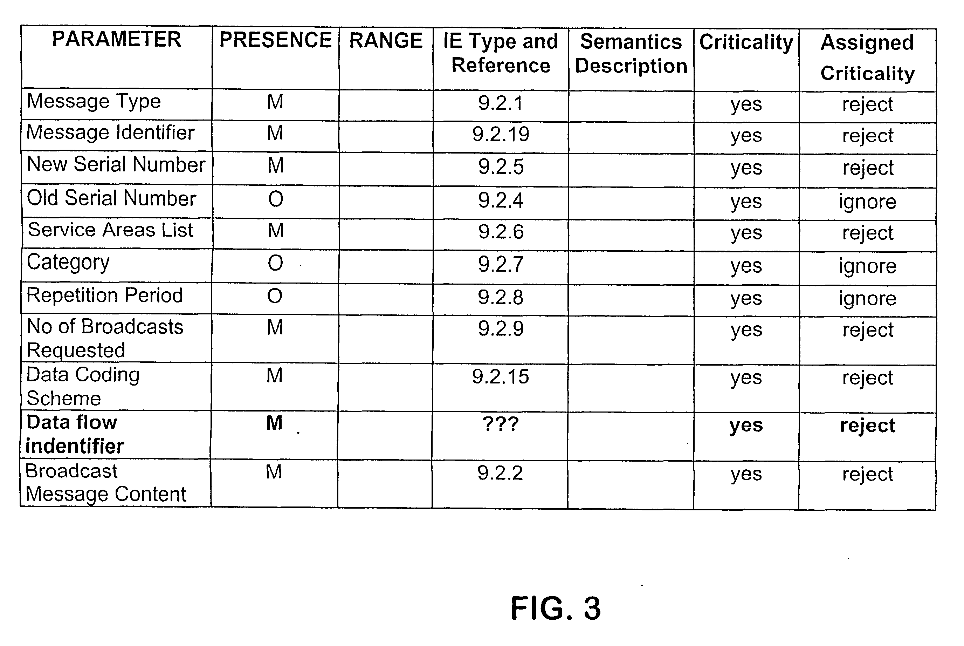

In the following, the SABP Write-Replace message employed in the network architecture of figure 1 for transmitting service data and other parameters will be described in more detail with reference to figures 2 and 3. The SABP Write-Replace message is one of several Elementary Procedures EPs of a SABP, which Eps form units of interaction between the CBC and the RNC. These EPs are defined separately and are intended to be used to build up complete sequences in a flexible manner. An EP consists of an initiating message and possibly a response message.,

It is one of the tasks of the Write-Replace message to broadcast new information to a selected Service Area, or to replace a message already broadcast. The structure of a conventional SABP Write-Replace message is depicted in the table of figure 2, which was taken from the above mentioned specification TS 25.419. The message is specified for broadcast messages, but can be used equally or similarly for multicast messages. The message contains several fields each associated to a specific parameter. Each field contains various information for the respective parameter. The table assigns in columns different values of this information to the different parameters.

The first field for a parameter "Message Type" uniquely identifies the transmitted message. It is mandatory for all messages. The second field for a parameter "Message Identifier" is set by the core network and transferred transparently to the user equipment. It identifies the source and type of the CBS Message. This information can be used by the user equipment to search only for specific messages. A field for a parameter "New Serial Number" enables the identification of a new broadcast message, and is altered every time the message is changed. A field for a parameter "Old Serial Number" enables an identification of an existing message. A further field for a parameter "Service Areas List" indicates the group of Service Area(s) that the message will be broadcast to. Another field is provided for a parameter "Category" and is used to indicate the priority of a message. A field for a parameter "Repetition Period" indicates the periodicity of message broadcasts, and a field for a parameter "No of Broadcasts Requested" indicates the number of times a message is to be broadcast. A field for a parameter "Data Coding Scheme" moreover identifies the alphabet or coding employed for the message characters and message handling at the user equipment. This field is passed transparently from the core network to the user equipment. Finally, a last field for a parameter "Broadcast Message Content" is sent from the core network to the RNC containing the user information, i.e. the data for one service of up to 1246 bits, and will be broadcast over the radio interface. The respective information is contained in all fields in an information element IE.

One value of additional information in each field relates to the presence of the parameter, which can be a mandatory parameter, indicated by "M", or optional, indicated by "O" in the second column of the table in figure 2. Another value is the range of the respective parameter, which indicates the allowed number of copies of repetitive IEs or IE groups. A column "IE Type and Reference" then indicates the section in the specification defining the respective parameter. A further column comprises the "semantics description" for the respective parameter. Another information is the "criticality", indicating whether in the SABP messages there is criticality information set for individual IEs and/or groups of IEs. This criticality information is included in the last column "assigned criticality" and instructs the receiver how to act when receiving an IE or an IE group that is not comprehended. In the exemplary table of figure 2, this assigned criticality is either reject or ignore for the different parameters. The range, the IE Type and the semantics description are not included in the table. They can be taken in detail from the specification for the different parameters.

The conventional structure of the SABP Write-Replace message illustrated in the table of figure 2 is supplemented according to the invention by a field for an additional parameter. This is indicated in figure 3, which presents the same table as figure 2, except that a data flow indication field for a new parameter was added. The new parameter is referred to in the table as "data flow identifier" and the corresponding new field is accentuated by shading. In the presented embodiment of the Write-Replace message, the new parameter is mandatory, and in case of criticality, the respective PDU is to be rejected by the RNC. The IE of the parameter identifies the association between the PDUs belonging to the same service data flow. This can be achieved for example by a flow number assigned to each service, which flow number is included in the IE of the data flow identification field of all Write-Replace messages employed for a single data flow. Only with such an additional information, the data of a single service message which was distributed to several Write-Replace messages can be processed correctly.

The additional data flow identification field may further include a variety of other information supporting the RNC in processing the PDUs correctly.

## Claims

1. Method for transmitting data for a specific service from a first network element (5) of a communications network via at least a second network element (10) of a communications network to a group of terminals (13), wherein said first network element (5) receives said data for said specific service from a service provider (1-4), and wherein said first network element (5) distributes said data for said specific service to one or more packets for transmission to said at least second network element (10),
**characterized in that**
said first network element (5) includes in each of said one or more packets a data flow identification information which enables said at least second network element (10) to identify all received packets to which said data for said specific service was distributed.

2. Method according to claim 1, wherein said data flow identification information comprises a specific flow number assigned to said specific service.

3. Method according to one of the preceding claims, wherein said data flow identification information comprises an indication of the length of said data of a specific service.

4. Method according to one of the preceding claims, wherein said data flow identification information comprises an indication of the number of packets belonging to said data for said specific service.

5. Method according to one of the preceding claims, wherein said data flow identification information comprises an identifier which indicates the end of said data for said specific service.

6. Method according to one of the preceding claims, wherein said data flow identification information comprises in the first packet to which said data for said specific service is distributed a start indicator indicating the start of new data for a new specific service.

7. Method according to one of the preceding claims, wherein said data flow identification information comprises in the last packet to which said data is distributed a length indicator for data for a specific service, which length indicator indicates the end of said data in said last packet for said specific service.

8. Method according to one of the preceding claims, wherein data for a specific service of a total amount which is smaller than an amount for which space is available for such data in a single one of said packets is distributed by said first network element (5) to at least two packets for transmission to said at least one second network element (10).

9. Method according to one of the preceding claims, wherein each of said packets to which said data for said specific service is distributed comprises up to 1246 bytes for said data for said specific service.

10. Method according to one of claims 1 to 8, wherein at least some of said packets to which said data for said specific service is distributed is allowed to comprise more than 1246 bytes for said data for said specific service.

11. Method according to one of the preceding claims, wherein said first network element (5) is a cell broadcast center (CBC).

12. Method according to one of the preceding claims, wherein said at least second network element (10) comprises at least one radio network controller (RNC) and/or at least one base station controller (BSC).

13. Method according to one of the preceding claims, wherein said one or more packets in which said data for a specific service and said data flow identification information are included for transmission from a first network element (5) to at least a second network element (10) are protocol data units (PDU).

14. Method according to claim 13, wherein said data for a specific service and said data flow identification information are included in a respective service area broadcast protocol (SABP) Write-Replace message of cell broadcast controller (CBC) protocol data units (PDU), each Write-Replace message being provided with a dedicated data flow identification field for including said data flow identification information.

15. Method according to one of the preceding claims, wherein said specific service is a specific cell broadcast service.

16. Method according to one of claims 1 to 14, wherein said specific service is a specific multicast service.

17. Network element (5) for a communications network, comprising
- means for receiving data for a specific service from a service provider (1-4), which data is to be transmitted to a group of terminals (13) via at least a second network element (10) of a communications network;
- means for distributing said data for said specific service to one or more packets for transmission to said at least second network element (10); and
- means for transmitting said packets to said at least second network element (10);
**characterized by**
- means for providing each of said packets before transmission with a data flow identification information which enables said at least second network element (10) to identify all received packets to which said data for said specific service was distributed.

18. Network element (5) according to claim 17 which is a cell broadcast center (CBC).

19. Network element (10) of a communications network, comprising
- receiving means for receiving from another network element (5) packets to which data for a specific service was distributed at said other network element (5) upon receipt of said data for a specific service from a service provider (1-4);
**characterized in that** each of said packets comprises a data flow identification information identifying all packets to which data for said specific service was distributed and **in that** said network element (10) further comprises
- means for extracting said data flow identification information from each received packet containing such a data flow identification information; and
- means for forwarding the data for a specific service in accordance with said extracted information to a group of terminals (13).

20. Network element (10) according to claim 19 which is a radio network controller (RNC) or a base station controller (BSC).

21. Communications network, which comprises at least one network element (5) according to claim 17 or 18 and at least one network element (10) according to claim 19 or 20.

22. Communications system, which comprises at least one network element (5) according to claim 17 or 18, at least one network element (10) according to claim 19 or 20 and a group of terminals (13).

23. Method comprising receiving at a second network element (10) of a communications network from a first network element (5) of a communications network packets to which data for a specific service was distributed at said first network element (5) upon receipt of said data for a specific service from a service provider (1-4),
**characterized in that** each of said received packets comprises a data flow identification information identifying all packets to which data for said specific service was distributed and **in that** said method further comprises at said second network element (10):
- extracting said data flow identification information from each received packet containing such a data flow identification information; and
- forwarding the data for a specific service in accordance with said extracted information to a group of terminals (13).

## Patentansprüche

1. Verfahren zum Übertragen von Daten für einen spezifischen Dienst von einem ersten Netzwerkelement (5) eines Kommunikationsnetzes über wenigstens ein zweites Netzwerkelement (10) eines Kommunikationsnetzes zu einer Gruppe von Endgeräten (13), wobei das besagte erste Netzwerkelement (5) die besagten Daten für den besagten spezifischen Dienst von einem Dienste-Anbieter (1-4) empfängt, und wobei das besagte erste Netzwerkelement (5) die besagten Daten für den besagten spezifischen Dienst auf ein oder mehrere Pakete zur Übertragung zu dem besagten wenigstens zweiten Netzwerkelement (10) verteilt,
**dadurch gekennzeichnet, dass**
das besagte erste Netzwerkelement (5) in jedem des besagten einen oder der besagten mehreren Pakete eine Datenfluss-Identifizierungsinformation enthält, die das besagte wenigstens zweite Netzwerkelement (10) in die Lage versetzt, alle empfangenen Pakete zu identifizieren, auf welche die besagten Daten für den besagten spezifischen Dienst verteilt worden sind.

2. Verfahren nach Anspruch 1, wobei die besagte Datenfluss-Identifizierungsinformation eine spezifische Fluss-Nummer umfasst, die dem besagten spezifischen Dienst zugewiesen worden ist.

3. Verfahren nach einem der vorhergehenden Ansprüche, wobei die besagte Datenfluss-Identifizierungsinformation eine Angabe der Länge der besagten Daten eines spezifischen Dienstes umfasst.

4. Verfahren nach einem der vorhergehenden Ansprüche, wobei die besagte Datenfluss-Identifizierungsinformation eine Angabe der Anzahl von Paketen umfasst, die zu den besagten Daten für den besagten spezifischen Dienst gehören.

5. Verfahren nach einem der vorhergehenden Ansprüche, wobei die besagte Datenfluss-Identifizierungsinformation eine Kennung umfasst, die das Ende der besagten Daten für den besagten spezifischen Dienst angibt.

6. Verfahren nach einem der vorhergehenden Ansprüche, wobei die besagte Datenfluss-Identifizierungsinformation in dem ersten Paket, auf das die besagten Daten für den besagten spezifischen Dienst verteilt werden, einen Anfangsindikator umfasst, der den Anfang von neuen Daten für einen neuen spezifischen Dienst angibt.

7. Verfahren nach einem der vorhergehenden Ansprüche, wobei die besagte Datenfluss-Identifizierungsinformation in dem letzten Paket, auf das die besagten Daten verteilt werden, einen Längenindikator für Daten für einen spezifischen Dienst umfasst, welcher Längenindikator das Ende der besagten Daten in dem besagten letzten Paket für den besagten spezifischen Dienst angibt.

8. Verfahren nach einem der vorhergehenden Ansprüche, wobei Daten für einen spezifischen Dienst mit einer Gesamtmenge, die kleiner als eine Menge ist, für die Platz für solche Daten in einem einzigen der besagten Pakete verfügbar ist, von dem besagten ersten Netzwerkelement (5) auf wenigstens zwei Pakete zur Übertragung zu dem besagten wenigstens einem zweiten Netzwerkelement (10) verteilt werden.

9. Verfahren nach einem der vorhergehenden Ansprüche, wobei jedes der besagten Pakete, auf welche die besagten Daten für den besagten spezifischen Dienst verteilt werden, bis zu 1246 Bytes für die besagten Daten für den besagten spezifischen Dienst umfasst.

10. Verfahren nach einem der Ansprüche 1 bis 8, wobei wenigstens einige der besagten Pakete, auf welche die besagten Daten für den besagten spezifischen Dienst verteilt werden, mehr als 1246 Bytes für die besagten Daten für den besagten spezifischen Dienst umfassen dürfen.

11. Verfahren nach einem der vorhergehenden Ansprüche, wobei das besagte erste Netzwerkelement (5) ein Cell Broadcast Center (CBC) ist.

12. Verfahren nach einem der vorhergehenden Ansprüche, wobei das besagte wenigstens zweite Netzwerkelement (10) wenigstens einen Funknetz-Controller (RNC) und/oder wenigstens einen Basisstations-Controller (BSC) umfasst.

13. Verfahren nach einem der vorhergehenden Ansprüche, wobei das besagte eine oder mehrere Pakete, in denen die besagten Daten für einen spezifischen Dienst und die besagte Datenfluss-Identifizierungsinformation für die Übertragung von einem ersten Netzwerkelement (5) zu wenigstens einem zweiten Netzwerkelement (10) enthalten sind, Protokolldateneinheiten (PDU) sind.

14. Verfahren nach Anspruch 13, wobei die besagten Daten für einen spezifischen Dienst und die besagte Datenfluss-Identifszierungsinformation in einer entsprechenden Dienstbereich-Rundsendeprotokoll-(SABP) Schreib-Ersetzungs-Nachricht der Protokolldateneinheiten (PDU) des Cell Broadcast Controllers (CBC) enthalten sind, wobei jede Schreib-Brsetzungs-Nachricht mit einem dedizierten Datenfluss-Identifizierungsfeld zur Aufnahme der besagten Datenfluss-Identifizierungsinformation bereitgestellt wird.

15. Verfahren nach einem der vorhergehenden Ansprüche, wobei der besagte spezifische Dienst ein spezifischer Cell-Broadcast-Dienst ist.

16. Verfahren nach einem der Ansprüche 1 bis 14, wobei der besagte spezifische Dienst ein spezifischer Sammelsende-Dienst ist.

17. Netzwerkelement (5) für ein Kommunikationsnetz, umfassend
- Mittel zum Empfangen von Daten für einen spezifischen Dienst von einem Dienste-Anbieter (1-4), welche Daten zu einer Gruppe von Endgeräten (13) über wenigstens ein zweites Netzwerkelement (10) eines Kommunikationsnetzes übertragen werden sollen;
- Mittel zum Verteilen der besagten Daten für den besagten spezifischen Dienst auf eines oder mehrere Pakete zur Übertragung zu dem besagten wenigstens zweiten Netzwerkelement (10); und
- Mittel zum Übertragen der besagten Pakete zu dem besagten wenigstens zweiten Netzwerkelement (10);
**gekennzeichnet durch**
- Mittel, um jedes der besagten Pakete vor der Übertragung mit einer Datenfluss-Identifizierungsinformation zu versehen, die das besagte wenigstens zweite Netzwerkelement (10) in die Lage versetzt, alle empfangenen Pakete, auf welche die besagten Daten für den besagten spezifischen Dienst verteilt worden sind, zu identifizieren.

18. Netzwerkelement (5) nach Anspruch 17, welches ein Cell Broadcast Center (CBC) ist.

19. Netzwerkelement (10) eines Kommunikationsnetzes, umfassend Empfangsmittel, um von einem anderen Netzwerkelement (5) Pakete, auf die Daten für einen spezifischen Dienst an dem besagten anderen Netzwerkelement (5) nach Empfang der besagten Daten für einen spezifischen Dienst von einem Dienste-Anbieter (1-4) verteilt worden sind, zu empfangen;
**dadurch gekennzeichnet, dass** jedes der besagten Pakete eine Datenfluss-Identifizierungsinformation umfasst, die alle Pakete identifiziert, auf die Daten für den besagten spezifischen Dienst verteilt worden sind, und **dadurch**, dass das besagte Netzwerkelement (10) des Weiteren umfasst
- Mittel zum Extrahieren der besagten Datenfluss-Identifizierungsinformation aus jedem empfangenen Paket, das eine derartige Datenfluss-Identifizierungsinformation enthält; und
- Mittel zum Weiterleiten der Daten für einen spezifischen Dienst in Übereinstimmung mit der besagten extrahierten Information zu einer Gruppe von Endgeräten (13).

20. Netzwerkelement (10) nach Anspruch 19, welches ein Funknetz-Controller (RNC) oder ein Basisstations-Controller (BSC) ist.

21. Kommunikationsnetz, welches wenigstens ein Netzwerkelement (5) nach Anspruch 17 oder 18 und wenigstens ein Netzwerkelement (10) nach Anspruch 19 oder 20 umfasst.

22. Kommunikationssystem, welches wenigstens ein Netzwerkelement (5) nach Anspruch 17 oder 18, wenigstens ein Netzwerkelement (10) nach Anspruch 19 oder 20 und eine Gruppe von Endgeräten (13) umfasst.

23. Verfahren, welches das Empfangen an einem zweiten Netzwerkelement (10) eines Kommunikationsnetzes von einem ersten Netzwerkelement (5) eines Koznmunikatiansnetzes von Paketen umfasst, auf die Daten für einen spezifischen Dienst an dem besagten ersten Netzwerkelement (5) nach Empfang der besagten Daten für einen spezifischen Dienst von einem Dienste-Anbieter (1-4) verteilt worden sind,
**dadurch gekennzeichnet, dass** jedes der besagten empfangenen Pakete eine Datenfluss-Identifizierungsinformation umfasst, die alle Pakete identifiziert, auf die Daten für den besagten spezifischen Dienst verteilt worden sind, und **dadurch**, dass das besagte Verfahren an dem besagten zweiten Netzwerkelement (10) des Weiteren umfasst
- Extrahieren der besagten Datenfluss-Identifizierungsinformation aus jedem empfangenen Paket, das eine derartige Datenfluss-Identifizierungsinformation enthält; und
- Weiterleiten der Daten für einen spezifischen Dienst in Übereinstimmung mit der besagten extrahierten Information zu einer Gruppe von Endgeräten (13).

## Revendications

1. Procédé en vue de transmettre des données destinées à un service spécifique d'un premier élément de réseau (5) appartenant à un réseau de communication, via au moins un second élément de réseau (10) appartenant à un réseau de communication, à un groupe de terminaux (13), dans lequel ledit premier élément de réseau (5) reçoit lesdites données destinées audit service spécifique d'un fournisseur de services (1 - 4), et dans lequel ledit premier élément de réseau (5) distribue lesdites données destinées audit service spécifique à un ou plusieurs paquets en vue d'une transmission audit au moins second élément de réseau (10),
**caractérisé en ce que**
ledit premier élément de réseau (5) inclut, dans chaque paquet dudit un ou desdits plusieurs paquets, des informations d'identification de flux de données qui permettent audit au moins second élément de réseau (10) d'identifier tous les paquets reçus auxquels lesdites données destinées audit service spécifique ont été distribuées.

2. Procédé selon la revendication 1, dans lequel lesdites informations d'identification de flux de données comportent un nombre de flux spécifique affecté audit service spécifique.

3. Procédé selon l'une quelconque des revendications précédentes, dans lequel lesdites informations d'identification de flux de données comportent une indication de la longueur desdites données d'un service spécifique.

4. Procédé selon l'une quelconque des revendications précédentes, dans lequel lesdites informations d'identification de flux de données comportent une indication du nombre de paquets appartenant auxdites données destinées audit service spécifique.

5. Procédé selon l'une quelconque des revendications précédentes, dans lequel lesdites informations d'identification de flux de données comportent un identifiant qui indique la fin desdites données destinées audit service spécifique.

6. Procédé selon l'une quelconque des revendications précédentes, dans lequel lesdites informations d'identification de flux de données comportent, dans le premier paquet auquel lesdites données destinées audit service spécifique sont distribuées, un indicateur de début indiquant le début de nouvelles données pour un nouveau service spécifique.

7. Procédé selon l'une quelconque des revendications précédentes, dans lequel lesdites informations d'identification de flux de données comportent, dans le dernier paquet auquel lesdites données sont distribuées, un indicateur de longueur pour des données destinées à un service spécifique, lequel indicateur de longueur indique la fin desdites données dans ledit dernier paquet pour ledit service spécifique.

8. Procédé selon l'une quelconque des revendications précédentes, dans lequel des données pour un service spécifique d'une quantité totale, qui est plus petite qu'une quantité pour laquelle un espace est disponible pour de telles données dans un paquet unique parmi lesdits paquets, sont distribuées par ledit premier élément de réseau (5) à au moins deux paquets en vue d'une transmission audit au moins un second élément de réseau (10).

9. Procédé selon l'une quelconque des revendications précédentes, dans lequel chacun desdits paquets auxquels lesdites données destinées audit service spécifique sont distribuées comporte jusqu'à 1 246 octets pour lesdites données destinées audit service spécifique.

10. Procédé selon l'une quelconque des revendications 1 à 8, dans lequel au moins certains desdits paquets auxquels lesdites données destinées audit service spécifique sont distribuées, sont autorisés à comporter plus de 1 246 octets pour lesdites données destinées audit service spécifique.

11. Procédé selon l'une quelconque des revendications précédentes, dans lequel ledit premier élément de réseau (5) est un centre de diffusion cellulaire (CBC).

12. Procédé selon l'une quelconque des revendications précédentes, dans lequel ledit au moins second élément de réseau (10) comporte au moins un contrôleur de réseau radio (RNC) et/ou au moins un contrôleur de station de base (BSC).

13. Procédé selon l'une quelconque des revendications précédentes, dans lequel ledit un ou lesdits plusieurs paquets dans lesquels lesdites données pour un service spécifique et lesdites informations d'identification de flux de données sont incluses en vue d'une transmission d'un premier élément de réseau (5) à au moins un second élément de réseau (10) sont des unités de données de protocole (PDU).

14. Procédé selon la revendication 13, dans lequel lesdites données pour un service spécifique et lesdites informations d'identification de flux de données sont incluses dans un message de remplacement - écriture de protocole de diffusion de zone de service respectif d'unités de données de protocole (PDU) de contrôleur de diffusion cellulaire (CBC), chaque message d'écriture - remplacement présentant un champ d'identification de flux de données dédié destiné à inclure lesdites informations d'identification de flux de données.

15. Procède selon l'une quelconque des revendications précédentes, dans lequel ledit service spécifique est un service de diffusion cellulaire spécifique.

16. Procédé selon l'une quelconque des revendications 1 à 14, dans lequel ledit service spécifique est un service de multidiffusion spécifique.

17. Élément de réseau (5) pour un réseau de communication, comportant
- des moyens en vue de recevoir des données pour un service spécifique d'un fournisseur de services (1 - 4), dont les données sont à transmettre à un groupe de terminaux (13) via au moins un second élément de réseau (10) d'un réseau de communication;
- des moyens en vue de distribuer lesdites données destinées audit service spécifique à un ou plusieurs paquets en vue d'une transmission audit au moins second élément de réseau (10) ;
- des moyens en vue de transmettre lesdits paquets audit au moins second élément de réseau (10) ;
**caractérisé par**
- des moyens en vue de fournir à chacun desdits paquets avant une transmission des informations d'identification de flux de données qui permettent audit au moins second élément de réseau (10) d'identifier tous les paquets reçus auxquels lesdites données destinées audit service spécifique ont été distribuées.

18. Élément de réseau (5) selon la revendication 17, qui est un centre de diffusion cellulaire (CBC).

19. Éléments de réseau (10) d'un réseau de communication, comportant
- des moyens de réception en vue de recevoir d'un autre élément de réseau (5) des paquets auxquels des données pour un service spécifique ont été distribuées au niveau dudit autre élément de réseau (5) lors de la réception desdites données pour un service spécifique à partir d'un fournisseur de services (1 - 4) ;
**caractérisé en ce que** chacun desdits paquets comporte des informations d'identification de flux de données identifiant tous les paquets auxquels des données destinées audit service spécifique ont été distribuées et **en ce que** ledit élément de réseau (10) comporte en outre
- des moyens en vue d'extraire lesdites informations d'identification de flux de données à partir de chaque paquet reçu contenant de telles informations d'identification de flux de données ;
- des moyens en vue d'acheminer les données pour un service spécifique selon lesdites informations extraites, à un groupe de terminaux (13).

20. Élément de réseau (10) selon la revendication 19, qui est un contrôleur de réseau radio (RNC) ou un contrôleur de station de base (BSC).

21. Réseau de communication, qui comporte au moins un élément de réseau (5) selon la revendication 17 ou 18 et au moins un élément de réseau (10) selon la revendication 19 ou 20.

22. Système de communication, qui comporte au moins un élément de réseau (5) selon la revendication 17 ou 18, au moins un élément de réseau (10) selon la revendication 19 ou 20 et un groupe de terminaux (13).

23. Procédé comportant l'étape consistant à recevoir au niveau d'un second élément de réseau (10) d'un réseau de communication à partir d'un premier élément de réseau (5) d'un réseau de communication, des paquets auxquels des données pour un service spécifique ont été distribuées au niveau dudit premier élément de réseau (5) lors de la réception desdites données pour un service spécifique à partir d'un fournisseur de services (1-4),
**caractérisé en ce que** chacun desdits paquets reçus comporte des informations d'identification de flux de données identifiant tous les paquets auxquels des données destinées audit service spécifique ont été distribuées et **en ce que** ledit procédé comporte en outre au niveau dudit second élément de réseau (10) les étapes consistant à :
- extraire lesdites informations d'identification de flux de données à partir de chaque paquet reçu contenant de telles informations d'identification de flux de données ;
- acheminer les données pour un service spécifique selon lesdites informations extraites, à un groupe de terminaux (13).
